(19) Europäisches Patentamt
European Patent Office
Office européen des brevets

(11) Veröffentlichungsnummer : **0 375 611 B1**

(12) # EUROPÄISCHE PATENTSCHRIFT

(45) Veröffentlichungstag der Patentschrift : **07.04.93 Patentblatt 93/14**

(51) Int. Cl.$^5$ : **C07F 7/18,** B01J 20/28

(21) Anmeldenummer : **89810941.8**

(22) Anmeldetag : **12.12.89**

(54) **Enantiomere Silane, modifiziertes Trägermaterial und dessen Verwendung.**

(30) Priorität : **20.12.88 CH 4762/88**

(43) Veröffentlichungstag der Anmeldung : **27.06.90 Patentblatt 90/26**

(45) Bekanntmachung des Hinweises auf die Patenterteilung : **07.04.93 Patentblatt 93/14**

(84) Benannte Vertragsstaaten : **CH DE FR GB IT LI NL SE**

(56) Entgegenhaltungen :
**DE-A- 3 524 215**
**US-A- 4 104 296**
**US-A- 4 591 652**
**CHEMICAL ABSTRACTS, Band 104, 2-16 Juni 1986, Seite 869; Zusammenfassung Nr199284q, Columbus, Ohio, US**

(56) Entgegenhaltungen :
**CHEMICAL ABSTRACTS, Band 93, 25 August 1 September 1980, Seite 1094, Zusammenfassung Nr. 88141a, Columbus, Ohio, US; S H Hara et al.: "Liquid chromatographic resolution of enantiomers on normal-phase chiral amide-bonded silica gel. Retentions of optically active alpha-amino acid derivatives on N-acyl homologs of L-valylaminopropylsilanized silica phases"; Journal Chrom. 1979, 186, 543-52**
**CHEMICAL ABSTRACTS, Band 93, 25 August - 1 September 1980, Seite 1094, Zusammenfassung Nr. 88143c, Columbus, Ohio, US; S H Hara et al.: "Liquid chromatographic resolution of racemic amino acid and dipeptide derivatives on chiral diamide-bonded silica gel"; & Pept. Chemie 1979, 17. Ausgabe, 133-8**
**THE JOURNAL OF ORGANIC CHEMISTRY, Band 49, NR 17, 24 August 1984, Seiten 3043-3046, Urbana, Illinois, US; W H Pirkle et al: "A Chiral Stationary Phase for the Facile Resolution of Amino Acids, Amino Alcohols, and Amines as the N-3,5-Dinitrobenzoyl Derivatives"**

(73) Patentinhaber : **CIBA-GEIGY AG**
**Klybeckstrasse 141**
**CH-4002 Basel (CH)**

(72) Erfinder : **Lohmann, Dieter, Dr.**
**Mittelweg 56**
**CH-4142 Münchenstein (CH)**
Erfinder : **Däppen, Richard, Dr.**
**Neumattstrasse 31**
**CH-4142 Münchenstein (CH)**

**EP 0 375 611 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft Enantiomere aus funktionellen Organosilanen und chiralen Lactonen, ein mit diesen Silanen modifiziertes Trägermaterial als stationäre Phase für chromatographische Trennverfahren, und die Verwendung des Trägermaterials zur chromatographischen Trennung von insbesondere chiralen Verbindungen.

Es ist bekannt, dass chirale Substanzen unterschiedliche Wirkungen auf Organismen ausüben. Die Bereitstellung chiraler Substanzen als Wirkstoffe bzw. als Zwischenprodukte zur Herstellung von chiralen Wirkstoffen hat eine hohe Bedeutung erlangt. Neben der stereospezifischen Synthese solcher Verbindungen werden besonders chromatographische Verfahren zur Trennung von Enantiomeren benutzt. Hauptsächlich werden hierbei stationäre Phasen verwendet, von denen eine Anzahl käuflich erhältlich ist. Bei solchen stationären Phasen kann es sich zum Beispiel um mit chiralen Substanzen modifizierte feste Trägermaterialien handeln. Ferner können auch natürliche und synthetische Polymere mit chiralen Strukturelementen verwendet werden. Als festes Trägermaterial kann beispielsweise Silikagel verwendet werden, dessen OH-Gruppen an der Oberfläche chemisch derivatisiert werden können. Ferner eignen sich auch feste Polymere mit funktionellen Gruppen, die derivatisiert werden können. Zur chiralen Differenzierung von Racematen können die Trägermaterialien zum Beispiel mit chiralen Verbindungen derivatisiert werden (vgl. R. Däppen et al., Journal of Chromatography, 373, S. 1-20 (1986).

In der US-PS 4 104 296 sind Umsetzungsprodukte von (Aminoalkyl)-alkoxysilanen mit achiralen Lactonen beschrieben, die z.B. als Haftvermittler in glasfaserverstärkten Kunststoffen verwendet werden können. J.F.W. Keana et al. erwähnen im J. Org. Chem., Vol. 51, S. 1641-1644 (1986) mit racemischem N-[3-(Triethoxysilyl)propyl]-10-trichlormethyl-10-hydroxyundecancarbonsäureamid modifiziertes Silikagel für Festphasensynthesen.

Ein Gegenstand der Erfindung sind Verbindungen der Formel I

$$(R^1O)_{3-a}Si(R^2)_a-R^3-(X-R^4)_b-Y-\left(\overset{O}{\overset{\|}{C}}-R^5-O\right)_e-H \qquad (I),$$

worin

$R^1$ $C_1$-$C_4$-Alkyl, Phenyl oder Benzyl bedeutet,

$R^2$ für $C_1$-$C_4$-Alkyl, Phenyl oder Benzyl steht,

a 0, 1 oder 2 bedeutet,

$R^3$ lineares oder verzweigtes $C_1$-$C_{12}$-Alkylen darstellt, das unsubstituiert oder mit -OH substituiert ist, oder $R^3$ Phenylen darstellt,

X für -O-, -S- oder -$NR^6$- steht, worin $R^6$ H, $C_1$-$C_4$-Alkyl oder -CO-$R^5$-OH bedeutet,

b für O steht,

oder b für eine Zahl von 1 bis 6 steht und $R^4$ lineares oder verzweigtes $C_1$-$C_{12}$-Alkylen darstellt, das unsubstituiert oder mit -OH substituiert ist,

Y für -O-, -S- oder -$NR^7$- steht, worin $R^7$ H oder $C_1$-$C_4$-Alkyl bedeutet,

$R^5$ der um die -CO-O-Gruppe verminderte zweiwertige Rest eines Lactons mit insgesamt 4 bis 7 Ringgliedern im Lactonring ist, das mindestens ein chirales C-Atom enthält und einer reinen enantiomeren Form oder zumindest überwiegend einer enantiomeren optisch aktiven Form entspricht und

e eine Zahl von 1 bis 10 bedeutet.

$R^1$ kann als Alkyl linear oder verzweigt und z.B. Methyl, Ethyl, n- und i-Propyl, n-, i- oder t-Butyl sein. Bevorzugt stellt $R^1$ Methyl oder Ethyl dar.

$R^2$ kann als Alkyl linear oder verzweigt und z.B. Methyl, Ethyl, n- und i-Propyl, n-, i- oder t-Butyl sein. Bevorzugt ist $R^2$ Methyl.

In Formel I steht a bevorzugt für 0 oder 1 und insbesondere für 0.

$R^3$ enthält als Alkylen bevorzugt 1 bis 6 C-Atome, besonders 3 oder 4 C-Atome, wobei das Alkylen unsubstituiert oder mit -OH substituiert ist. Das Alkylen ist besonders dann mit -OH substituiert, wenn Y für -O- steht. Beispiele für Alkylen sind Methylen, 1,1- oder 1,2-Ethylen, 1,1-, 1,2- oder 1,3-Propylen, 1,2-, 1,3- oder 1,4-Butylen, 2-Methyl-1,3-propylen, 1,2-, 1,3-, 1,4- oder 1,5-Pentylen, 1,2-, 1,3-, 1,4-, 1,5- oder 1,6-Hexylen, Heptylen, Octylen, Nonylen, Decylen, Undecylen oder Dodecylen.

$R^3$ stellt als Phenylen besonders 1,3- oder 1,4-Phenylen dar.

Besonders bevorzugt steht $R^3$ für

$$-(CH_2)_n-,$$

oder $-CH_2-CH(CH_3)-CH_2-$, wobei n eine Zahl von 1 bis 6, besonders 3 oder 4 bedeutet. Ganz besonders steht $R^3$ für 1,3-Propylen.

In Formel I kann b für eine Zahl von 1 bis 4, besonders 1 oder 2 stehen.

X steht bevorzugt für -O- oder $-NR^6-$, besonders für $-NR^6-$, wobei $R^6$ H, $C_1$-$C_4$-Alkyl oder $-CO-R^5-OH$ bedeutet. Beim Alkyl kann es sich um Methyl, Ethyl, n- oder i-Propyl, n-, i- oder t-Butyl und besonders um Methyl handeln. Bevorzugt stellt $R^6$ H oder $-CO-R^5-OH$ dar.

$R^4$ kann als Alkylen unabhängig die für $R^3$ angegebenen Bedeutungen haben, einschliesslich der Bevorzugungen. Besonders bevorzugt bedeutet $R^4$ 1,2-Ethylen. Eine bevorzugte Ausführungsform besteht darin, dass X für -O- oder $-NR^6-$ steht, b eine Zahl von 1 bis 4 bedeutet, $R^6$ H oder $-CO-R^5-OH$ darstellt und $R^4$ für $C_1$-$C_4$-Alkylen steht. Besonders bevorzugt sind Verbindungen, worin b 1 oder 2 ist, X für $-NR^6-$ und $R^6$ für H oder $-CO-R^5-OH$ stehen, und $R^4$ für $-CH_2CH_2-$ oder $-CH_2CH_2CH_2-$ steht.

Y steht bevorzugt für -O- oder $-NR^7-$, besonders $-NR^7-$. $R^7$ kann als Alkyl Methyl, Ethyl, n- oder i-Propyl, n-, i- oder t-Butyl und besonders Methyl bedeuten.

Eine bevorzugte Untergruppe sind solche Verbindungen der Formel I, worin Y für -O- oder $-NR^7-$ steht und $R^7$ H, Methyl oder Ethyl bedeutet. Besonders bevorzugt steht Y für -NH-.

Die Gruppe

$$-R^3-(X-R^4)_b-Y-$$

in Formel I steht besonders für

$$-(CH_2)_3-NH-$$

oder

$$-(CH_2)_3-NR^6-CH_2CH_2-NH-,$$

worin $R^6$ H oder $-CO-R^5-OH$ bedeutet.

In Formel I steht e bevorzugt für eine Zahl von 1 bis 6, besonders 1 bis 4, und insbesondere 1.

Bei $R^5$ als zweiwertigem Rest eines Lactons enthält das Lacton bevorzugt 4 bis 6, besonders 4 oder 5 Ringglieder. Es kann je nach Ringgrösse 1 bis 6, bevorzugt 1 bis 4 und besonders 1 oder 2 chirale C-Atome enthalten. Bevorzugt befindet sich ein chirales C-Atom im Rest $R^5$ in $\alpha$-oder $\beta$-Stellung zur OH-Gruppe. Ueberwiegend bedeutet enantiomere optisch aktive Form z.B. mindestens 90 %, bevorzugt mindestens 95 % einer optisch aktiven enantiomeren Form. Besonders bevorzugt ist die reine enantiomere Form.

Bei den Lactonen, von denen sich der zweiwertige Rest $R^5$ ableitet, kann es sich z.B. um mindestens einfach substituierte Lactone von gesättigten $C_3$-$C_6$-Hydroxycarbonsäuren oder ethylenisch ungesättigten $C_4$-$C_6$-Hydroxycarbonsäuren; oder um Hydroxycarbonsäuren der Formel VII

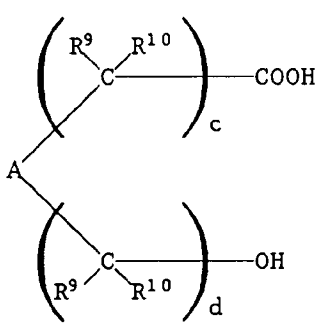

(VII)

handeln,

worin c und d je für 0 oder 1 stehen und eines von c oder d 1 ist, $R^9$ und $R^{10}$ H, $C_1$-$C_6$-Alkyl, $-CF_3$, oder gegebenenfalls substituiertes Phenyl oder Naphthyl bedeuten, und A einen in mono- oder polycyclischen, gesättigten oder ethylenisch ungesättigten cycloaliphatischen oder heterocycloaliphatischen Rest mit 4 bis 18, besonders 5 bis 12 C-Atomen mit vorzugsweise O,S oder N als Heteroatomen bedeutet, oder A für in 1,2-Stellung gebundenes $C_6$-$C_{16}$-Arylen oder $C_5$-$C_{16}$-Heteroarylen mit vorzugsweise O, S oder N als Heteroatom steht, wobei mindestens eines von c oder d 1 bedeuten und $R^9$ und $R^{10}$ voneinander verschieden sind.

Der Rest A in Formel VII, von dem sich $R^5$ ableitet, kann unsubstituiert oder mit $C_1$-$C_6$-Alkyl, $C_1$-$C_6$-Alkoxy, $C_1$-$C_6$-Alkylthio, $C_1$-$C_{12}$-Alkylamino, $C_5$- oder $C_6$-Cycloalkyl, $C_5$- oder $C_6$-Cycloalkoxy, $C_6$-$C_{10}$-Aryl, $C_6$-$C_{10}$-Aryloxy, $C_7$-$C_{11}$-Aralkyl, $C_7$-$C_{12}$-Aralkyloxy, $C_1$-$C_6$-Halogenalkyl, $C_1$-$C_6$-Hydroxyalkyl, $C_1$-$C_6$-Alkoxymethyl, ($C_6$-$C_{12}$-Aryloxy)methyl, ($C_6$-$C_{18}$-Aryl)methyloxymethyl, $C_1$-$C_{12}$-Acyloxy, -CO-OR$^8$, -F, -Cl, -Br, -OH oder -CN substituiert sein, wobei $R^8$ $C_1$-$C_6$-Alkyl, Cyclohexyl, Phenyl oder Benzyl bedeutet. Beispiele für Substituenten sind Methyl, Ethyl, n- und i-Propyl, n-, i- und t-Butyl, Pentyl, Hexyl und entsprechende Oxy- und Thioreste; Cyclopentyl, Cyclohexyl und entsprechende Oxy- und Thioreste; Phenyl, Phenyloxy, Phenylthio; Benzyl, Triphenylmethyloxy, Benzyloxy, Benzylthio, Fluormethyl, Trifluormethyl, Chlormethyl, Trichlormethyl, β-Chlorethyl; Hydroxymethyl, β-Hydroxyethyl; Methoxymethyl, Ethoxymethyl, β-Methoxyethyl; Phenoxymethyl, Naphthyloxymethyl; Benzyloxymethyl, (Diphenylmethyloxy)methyl, (Triphenylmethyloxy)methyl; Formyloxy, Acetyloxy, n- und i-Propionyloxy, n-, i- und t-Butyroyloxy; -F, -Cl, -Br, -OH und -CN.

Beispiele für zweiwertige Reste von Hydroxycarbonsäuren sind 1,2-Propylen, 3-Chlor-1,2-propylen, 3,3-Dichlor-1,2-propylen, 3,3,3-Trichlor-1,2-propylen, 3,3,3-Trichlor-2-methyl-1,2-propylen, 4,4,4-Trichlor-1,3-butylen, But-1-enyl-1,3-en, 2-Methyl-but-1-enyl-1,4-en, 1,2,3,4-Tetrahydroxybutyl-1,4-en, 1,2,3,4,5-Pentahydroxypentyl-1,5-en, 2-Methyl-1,3-propylen, 2,2-Dimethyl-3-hydroxy-1,3-propylen, 1-Hydroxy-1,3-propylen, 1-(Ethoxycarbonyl)-1,3-propylen, 1-(Triphenylmethyloxy)1,3-propan, 3-(α,β-Dihydroxyethyl)-1,2-dyhydroxy-1, 3-propylen.

Die cyclischen nichtaromatischen Reste A in Formel III können in 1,2-, 1,3- oder 1,4-Stellung gebunden sein. Beispiele für A sind 1,2-Cyclobutylen, 1,2-Cyclopentylen, 1,2-Cyclohexylen, 2,3-Tetrahydrofuranylen, Cyclohex-4-enyl-1,2-en, 1,2-Phenylen, 4-Nitro-1,2-phenylen, 3,5-Dinitro-1,2-phenylen, 2,3-Naphthylen, 7-Nitro-2,3-naphthylen, 2,3-Pyridinylen, 2,3-Furanylen, 2,3-Pyrrolyden.

$R^9$ steht bevorzugt für H. $R^9$ und $R^{10}$ als Alkyl können z.B. Methyl, Ethyl, n- oder i-Propyl, n-, i- oder t-Butyl, Pentyl oder Hexyl, vorzugsweise Methyl oder Ethyl sein.

Bevorzugt sind Verbindungen der Formel I, worin $R^5$ lineares $C_2$-$C_5$-Alkylen oder $C_3$-$C_5$-Alkenylen darstellt, das mit $C_1$-$C_6$-Alkyl, $C_1$-$C_6$-Alkoxy, $C_1$-$C_6$-Alkylthio, $C_1$-$C_{12}$-Alkylamino, $C_5$- oder $C_6$-Cycloalkyl, $C_5$- oder $C_6$-Cycloalkoxy, $C_6$-$C_{10}$-Aryl, $C_6$-$C_{10}$-Aryloxy, $C_7$-$C_{11}$-Aralkyl, $C_7$-$C_{12}$-Aralkyloxy, $C_1$-$C_6$-Halogenalkyl, $C_1$-$C_6$-Hydroxyalkyl, $C_1$-$C_6$-Alkoxymethyl, ($C_6$-$C_{12}$-Aryloxy)-methyl, ($C_6$-$C_{18}$-Aryl)methyloxymethyl, $C_1$-$C_{12}$-Acyloxy, -CO-OR$^8$, -F, -Cl, -Br, -OH oder -CN substituiert ist, wobei $R^8$ $C_1$-$C_6$-Alkyl, Cyclohexyl, Phenyl oder Benzyl bedeutet.

Bevorzugte Substituenten sind $C_1$-$C_4$-Alkyl, $C_1$-$C_4$-Alkoxy, $C_1$-$C_6$-Alkylamino, $C_5$- oder $C_6$-Cycloalkyl, $C_5$- oder $C_6$-Cycloalkoxy, Phenyl, Naphthyl, Phenyloxy, Benzyl, Benzyloxy, Diphenylmethyloxy, Trityloxy, $C_1$-$C_4$-Halogenalkyl, besonders Trichlormethyl, $C_1$-$C_4$-Hydroxyalkyl, $C_1$-$C_4$-Alkoxymethyl, Phenoxymethyl, Benzyloxymethyl, $C_2$-$C_8$-Acyloxy, -CO-OR$^8$, -F, -Cl, -Br, -OH und -CN, wobei $R^8$ $C_1$-$C_4$-Alkyl, Cyclohexyl, Phenyl oder Benzyl ist.

Eine andere bevorzugte Ausführungsform sind Verbindungen der Formel I, worin $R^5$ einem Rest der Formel II entspricht,

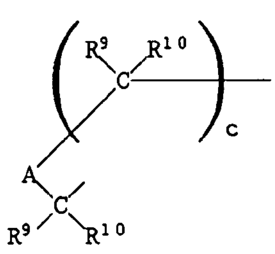

(II),

worin

A 1,2-Phenylen oder 2,3-Naphthylen bedeutet, das unsubstituiert oder mit -F, -Cl, -Br, -OH, -CN, -$NO_2$, $C_1$-$C_6$-Alkyl oder $C_1$-$C_6$-Alkoxy substituiert ist,

c für 0 oder 1 steht, und

$R^9$ und $R^{10}$ voneinander verschieden sind und H, $C_1$-$C_6$-Alkyl, -$CF_3$, Phenyl oder Naphthyl bedeuten, wobei das Phenyl oder Naphthyl unsubstituiert oder mit -F, -Cl, -Br, -OH, -CN, -$NO_2$, -$CF_3$, $C_1$-$C_6$-Alkyl oder $C_1$-$C_6$-Alkoxy substituiert ist. Bevorzugte Substituenten für A sind -F, -Cl, -Br, -CN, -$NO_2$, $C_1$-$C_4$-Alkyl und $C_1$-$C_4$-Alkoxy.

$R^9$ und $R^{10}$ sind bevorzugt H, $C_1$-$C_4$-Alkyl, -$CF_3$, Phenyl oder Naphthyl. Bevorzugte Substituenten für Phenyl oder Naphthyl sind -F, -Cl, -Br, -CN, $-NO_2$, $-CF_3$, $C_1$-$C_4$-Alkyl oder $C_1$-$C_4$-Alkoxy.

In einer bevorzugten Ausführungsform steht $R^5$ für den um die COO-Gruppe verminderten zweiwertigen Rest eines β-Lactons, das bevorzugt 1 chirales C-Atom enthält.

In einer besonders bevorzugten Ausführungsform steht $R^5$ für die R- oder S-Form von $-CH_2-CH(CCl_3)-$ oder

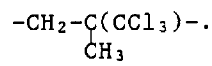

Ganz besonders bevorzugt handelt es sich bei den Verbindungen der Formel I um die R- oder S-Enantiomeren der Formel

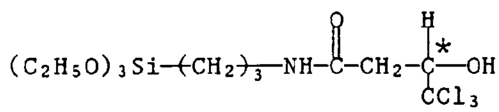

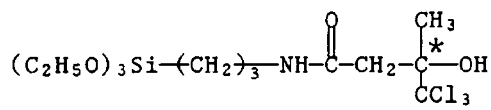

wobei ∗ das chirale C-Atom in R- oder S-Form kennzeichnet.

Ein weiterer Gegenstand der Erfindung ist ein Verfahren zur Herstellung von Verbindungen der Formel I, das dadurch gekennzeichnet ist, dass man 1 Mol einer Verbindung der Formel III

$$(R^1O)_{3-a}Si(R^2)_a-R^3-(X-R^4)_b-Y-H \qquad (III)$$

mit e Mol einer Verbindung der Formel IV

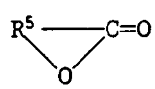

(IV)

umsetzt, wobei $R^1$, $R^2$, $R^3$, $R^4$, $R^5$, X, Y, a, b und e die zuvor angegebenen Bedeutungen haben.

Die Methode ist an sich bekannt. Die Umsetzung kann z.B. dergestalt erfolgen, dass man eine Lösung der Verbindungen der Formel III vorzugsweise bei Raumtemperatur zu einer Lösung des Lactons der Formel IV zugibt und reagieren lässt. Die Aufarbeitung kann nach üblichen Methoden erfolgen, z.B. indem man das Lösungsmittel verdampft und den Destillationsrückstand z.B. durch Destillation, Umkristallistion oder chromatographische Methoden, reinigt.

Geeignete Lösungsmittel sind beispielsweise aprotische Lösungsmittel wie z.B. Ether (Diethylether, Tetrahydrofuran, Dioxan), halogenierte aliphatische Kohlenwasserstoffe (Methylenchlorid, Chloroform) und Kohlenwasserstoffe (Hexan, Cyclohexan, Toluol).

Die Verbindungen der Formel III sind bekannt (siehe z.B. US-PS 2 971 964 oder US-PS 2 942 019), nach bekannten Verfahren herstellbar oder kommerziell erhältlich. Optisch aktive Lactone der Formel IV sind in grosser Anzahl bekannt oder können nach bekannten Verfahren hergestellt werden [vgl. z.B. J. Chem. Soc., Vol. 104, S. 166-168 (1982), J. Org. Chem., 52, S. 3011-3017 (1987), J. Chromatogr., 387, S. 313-323 (1987), Houben-Weyl 6/2, S. 515-527 (1963), Houben-Weyl 6/2, S. 571 ff (1963), Houben-Weyl E 5/1, S. 715-773 (1985) Georg Thieme Verlag, Stuttgart/New York]. Racemate können nach bekannten Verfahren getrennt werden.

Die Verbindungen der Formel I eignen sich z.B. zur Herstellung von Materialien für chromatographische Trennverfahren.

Ein weiterer Gegenstand der Erfindung ist ein Material, dadurch gekennzeichnet, dass an eine Brückengruppe eines festen Trägermaterials Reste der Formel Va, Vb und/oder Vc

$$-Si(OR^1)_{2-x}(R^2)_x-R^3-(X-R^4)_b-Y-\left(\overset{O}{\overset{\|}{C}}-R^5-O\right)_e-H \quad (Va),$$

$$>Si(OR^1)_{1-y}(R^2)_y-R^3-(X-R^4)_b-Y-\left(\overset{O}{\overset{\|}{C}}-R^5-O\right)_e-H \quad (Vb),$$

$$>Si-R^3-(X-R^4)_b-Y-\left(\overset{O}{\overset{\|}{C}}-R^5-O\right)_e-H \quad (Vc),$$

gebunden sind, worin x für 0, 1 oder 2 und y für 0 oder 1 stehen und $R^1$, $R^2$, $R^3$, $R^4$, $R^5$, X, Y, b und e die zuvor angegebenen Bedeutungen haben. Für $R^1$, $R^2$, $R^3$, $R^4$, $R^5$, X, Y, e und b gelten auch die zuvor angegebenen Bevorzugungen. Bei der Brückengruppe handelt es sich besonders um -O-.

Ein weiterer Gegenstand der Erfindung ist ein Verfahren zur Herstellung eines Materials, das dadurch gekennzeichnet ist, dass man

a) ein festes Trägermaterial mit über Brückengruppen gebundenen Resten der Formeln VIa, VIb und/oder VIc

$$-Si(OR^1)_{2-x}(R^2)_x-R^3-(X-R^4)_b-Y-H \quad (VI),$$

$$>Si(OR^1)_{1-y}(R^2)_y-R^3-(X-R^4)_b-Y-H \quad (VI),$$

$$>Si-R^3-(X-R^4)_b-Y-H \quad (VI),$$

mit e Mol eines Lactons der Formel IV

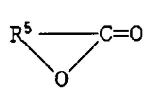

(IV)

umsetzt, oder

b) ein festes Trägermaterial, das gegenüber der Silangruppe

$$(R^1O)_{3-a}Si(R^2)_a-$$

reaktive Gruppen enthält, mit einer Verbindung der Formel I umsetzt,

wobei x für 0, 1 oder 2 und y 0 oder 1 bedeuten und $R^1$, $R^2$, $R^3$, $R^4$, $R^5$, X, Y, b und e die zuvor angegebenen Bedeutungen haben.

Für $R^1$, $R^2$, $R^3$, $R^4$, $R^5$, X, Y, b, e, x und y gelten auch die zuvor angegebenen Bevorzugungen.

Bei den festen Trägermaterialien kann es sich z.B. um Glas, Silikate, Silikagel, $Al_2O_3$ oder $TiO_2$ handeln. Das Trägermaterial liegt bevorzugt in Form feiner Teilchen vor. Solche Trägermaterialien sind vielfach in der Literatur beschrieben [siehe z.B. M. Verzele et al., Preparative High Performance Liquid Chromatography, Drukkerig De Muyter, Belgien, S. 77-89 (1986); R.W. Souter, Chromatographic Separations of Stereoisomers,

CRC Press, S. 117-195 (1985); W. Noll, Chemie und Technologie der Silicone, Verlag Chemie, Weinheim (1968), Laborbücher Chemie, Praxis der Hochleistungs-Flüssigchromatographie, Verlag Moritz Diesterweg, S. 76-78 (1986)]. Ein besonders bevorzugtes Trägermaterial ist Silikagel.

Das Trägermaterial in der Verfahrensvariante a) ist teilweise kommerziell erhältlich oder nach bekannten Verfahren herstellbar.

Das Verfahren kann so durchgeführt werden, dass man die Reaktion in einem separaten Reaktionsgefäss durchführt und dann das Reaktionsprodukt in eine Chromatograhiesäule füllt. Man kann das Verfahren aber auch so durchführen, dass man die Reaktion z.B. in einer Chromatographiesäule oder mit beschichteten Dünnschichtplatten durchführt, die mit einem Trägermaterial gemäss Verfahrensvariante a) oder b) gefüllt bzw. beschichtet ist. Diese Verfahren sind an sich bekannt. Die erfindungsgemässe Verfahrensvariante a) ist besonders bevorzugt.

Die Reaktion kann z.B. so durchgeführt werden, dass man das Trägermaterial in einem inerten Lösungsmittel suspendiert, z.B. in Kohlenwasserstoffen wie Hexan, Benzol, Toluol oder Xylol. Zu der Suspension kann dann eine Lösung eines reinen enantiomeren Lactons der Formel IV bzw. eine Verbindung der Formel I zugegeben werden. Als Lösungsmittel wird zweckmässig das in der Suspension verwendete Lösungsmittel verwendet. Die Temperatur bei der Zugabe wird vorteilhaft bei Raumtemperatur gehalten. Das Reaktionsgemisch wird darauf noch weiter gerührt, bevorzugt bei erhöhter Temperatur, z.B. 50 bis 150°C. Das Umsetzungsprodukt kann entweder direkt für chromatographische Zwecke in Säulen gefüllt werden oder das Material abfiltriert, gewaschen, getrocknet und bis zur Verwendug gelagert werden.

Das erfindungsgemässe Material eignet sich hervorragend als stationäre Phase in chromatographischen Trennverfahren von chiralen Verbindungen, besonders in flüssigchromatographischen Verfahren. Eine solche Verwendung ist ein weiterer Gegenstand der Erfindung.

Das erfindungsgemässe chromatographische Material bietet verschiedene Vorteile:

Es ist gemäss Verfahrensvariante a) ist in einer Einstufenreaktion ohne Hilfsmittel (z.B. Katalysatoren) herstellbar, wobei praktisch keine Nebenprodukte gebildet und hohe Pfropfausbeuten erzielt werden. Die Umsetzung kann in gefüllten Chromatographiesäulen durchgeführt werden. Die Elutionsreihenfolge kann durch die Auswahl von (R)- und (S)-Enantiomeren der Lactone beeinflusst werden.

Es eignet sich für die Trennung von sonst schwierig oder nur nach vorheriger Derivatisierung trennbaren Racematen, wie z.B. racemischen Diolen, Diaminen, Heterocyclen und Rotationsisomeren. Neben Enantiomeren können auch Diastereomere und andere Stereoisomere getrennt werden. Das Material zeigt eine hohe chemische Stabilität, wodurch eine lange Verwendbarkeit gewährleistet wird.

Die präparative Kapazität ist hoch.

Ueblicherweise werden Hexan, niedere Alkohole oder Ether oder Gemische davon als Lösungsmittel verwendet. Das erfindungsgemässe Material ermöglicht die Verwendung technischer Lösungsmittel und stark polarer Lösungsmittel, z.B. $CH_2Cl_2$, $CHCl_3$, Aceton, Essigsäureethylester, Tetrahydrofuran, Dioxan oder Acetonitril. Mit der Verwendung von polaren Lösungsmitteln kann eine erhebliche Verkürzung der Elutionszeiten erzielt werden, was besonders für die präparative Chromatographie von Bedeutung ist. Es können auch superkritische Lösungsmittel verwendet werden, z.B. Kohlendioxid.

Die hohen Enantioselektivitäten sind besonders überraschend, wenn in $-R^5$-OH der chirale Selektor

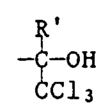

endständig gebunden ist, wobei R′ H oder $C_1$-$C_6$-Alkyl, z.B. Methyl, Ethyl, Propyl oder Butyl, bedeutet.

Die nachfolgenden Beispiele erläutern die Erfindung näher.

A) Herstellung von Ausgangsprodukten

Beispiel 1:

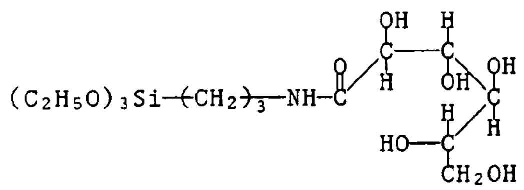

In einem 250 ml Dreihalskolben, versehen mit Magnetrührer, Innenthermometer und Stickstoffeinleitung, wird unter Stickstoffatmosphäre eine Lösung von 11,52 g 3-Aminopropyl-triethoxysilan (0,05 Mol) in 25 ml trockenem Tetrahydrofuran (THF) während 20 Minuten zu einer Suspension von 9,0 g (0,05 Mol) D(+)Glucono-δ-lakton in THF zugetropft. Nach 12-stündigem Rühren bei Raumtemperatur ist eine klare Lösung entstanden, und es kann im Reaktionsgemisch dünnschichtchromatographisch kein unumgesetztes Lakton mehr nachgewiesen werden. Durch Eindampfen der Lösung und Trocknen des festen Rückstandes im Vakuum werden 19,8 g eines weissen kristallinen Produktes erhalten. Nach Umkristallisieren aus Cyclohexan/THF (6:1) unter Zusatz von 0,6 g Aktivkohle zeigt das optisch aktive funktionelle Silan einen Schmelzpunkt von > 99,5°C (Zers.). Die Ausbeute beträgt 15,1 g, entsprechend 75,6 % der Theorie.

| | | | | | |
|---|---|---|---|---|---|
| Elementaranalyse: | berechnet | 45,1 % C; | 8,3 % H; | 3,5 % N; | 7,0 % Si. |
| | gefunden | 44,8 % C; | 8,1 % H; | 3,9 % N; | 6,8 % Si. |

Beispiele 2-8:

Wie in Beispiel 1 beschrieben werden die nachfolgend in der Tabelle 1 aufgeführten optisch aktiven Laktone mit 3-Aminopropyl-triethoxysilan (APTES) umgesetzt.

Tabelle 1:

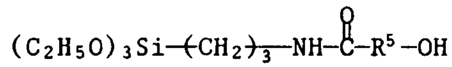

| Beispiel No. | Lakton (g) | APTES (g) | Lösungsmittel (ml) Reaktions-temperatur (°C) Reaktionszeit (h) | Reinigung | Eigenschaften | $R^5$ |
|---|---|---|---|---|---|---|
| 2 | 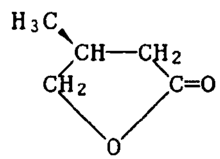 (1,22 g; 0,012 Mol) D-(+)-Enantiomer | 2,76 g (0,012 Mol) | Tetrahydro-furan (25 ml) 20 - 30 14 | Säulen-chromato-graphie: Kieselgel/ Toluol | viskos farblos | 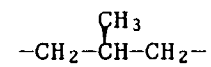 |
| 3 | 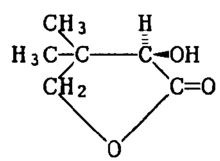 (1,44 g; 0,011 Mol) D-(+)-Enantiomer | 2,53 g (0,011 Mol) | Dioxan (25 ml) 20 - 40 12 | Säulen-chromato-graphie: Kieselgel, Toluol/ Tetrahydro-furan (1:1) | viskos farblos | 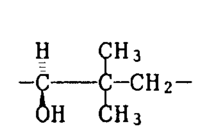 |
| 4 | 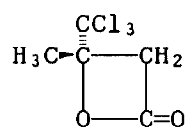 (4,89 g; 0,024 Mol) S-(-)-Enantiomer | 5,53 g (0,024 Mol) | Toluol (25 ml) 20 - 40 48 | Säulen-chromato-graphie: Kieselgel, Toluol/ Essigsäure-ethylester (9:1) | viskos farblos | 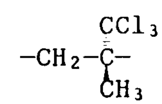 |

Fortsetzung Tabelle 1

| Beispiel No. | Lakton (g) | APTES (g) | Lösungsmittel (ml) Reaktions-temperatur (°C) Reaktionszeit (h) | Reinigung | Eigenschaften | $R^5$ |
|---|---|---|---|---|---|---|
| 5 | 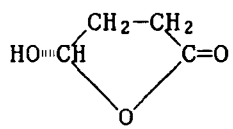 (1,29 g; 0,011 Mol) S-(+)-Enantiomer | 2,53 g (0,011 Mol) | Tetrahydro-furan (25 ml) 20 - 40 18 | Umkristal-lisation Tetrahydro-furan/Di-ethylether (1:1) | weiss | 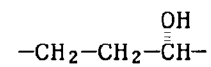 |
| 6 | 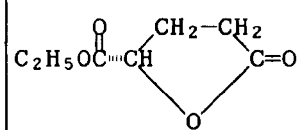 (1,61 g; 0,01 Mol) S-(-)-Enantiomer | 2,3 g (0,01 Mol) | Tetrahydro-furan (25 ml) 20 - 30 24 | Säulen-chromato-graphie: Kieselgel, Essigsäure-ethylester | viskos weiss | 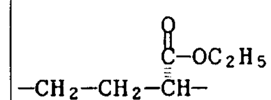 |
| 7 | 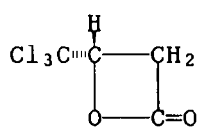 (4,94 g; 0,026 Mol) S-(+)-Enantiomer | 5,99 g (0,026 Mol) | Toluol (25 ml) 20 - 60 12 | Säulen-chromato-graphie: Kieselgel, Toluol/ Essigsäure-ethylester (1:9) | viskos weiss | 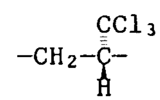 |

Tabelle 1 (Fortsetzung)

| Beispiel No. | Lakton (g) | APTES (g) | Lösungsmittel (ml) Reaktions-temperatur (°C) Reaktionszeit (h) | Reinigung | Eigenschaften | $R^5$ |
|---|---|---|---|---|---|---|
| 8 | 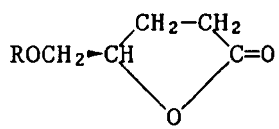 R = $(C_6H_5)_3C-$ (2,5 g; 0,0069 Mol) R-(-)-Enantiomer | 1,52 g (0,0069 Mol) | Tetrahydro-furan (25 ml) 90 - 100 16 | Säulen-chromato-graphie: Kieselgel, Toluol/ Essigsäure-ethylester (1:9) | viskos farblos | 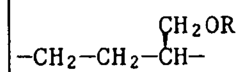 |

Beispiel 9:

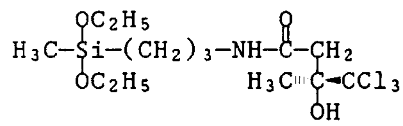

Analog Beispiel 1 wird eine Lösung von 4,78 g (0,025 Mol) 3-Aminopropylmethyl-diethoxysilan in 10 ml trockenem Toluol bei Raumtemperatur zu einer Lösung von 5,09 g (0,025 Mol) R(+)-4-Methyl-4-trichlormethyl-2-oxetanon in 20 ml trockenem Toluol zugetropft. Dabei wird mit Wasser gekühlt, so dass die Temperatur nicht über 40°C steigt. Anschliessend wird 12 Stunden bei Raumtemperatur gerührt. Nach Verdampfen des Lösungsmittels wird der zähviskose Rückstand (9,5 g) durch Säulenchromatographie an Kieselgel mit Hexan/Diethylether (1:9) als Eluent gereinigt. Man erhält 8,4 g (85 % der Theorie) eines farlosen viskosen Produkts.

Elementaranalyse:

| | | | | | |
|---|---|---|---|---|---|
| ber. | 39,55 % C; | 6,64 % H; | 3,55 % N; | 26,94 % Cl; | 7,11 % Si. |
| gef. | 39,7 % C; | 6,8 % H; | 3,5 % N; | 26,7 % Cl; | 7,4 % Si. |

Beispiel 10:

Zu einer Suspension von 56 g getrocknetem, aminopropyl-funktionalisiertem Kieselgel (Lichroprep $NH_2$, Merck AG Darmstadt; Partikelgrösse 25-40 µm, N-Gehalt 1,36 % entsprechend 0,97 mVal/g Kieselgel) in 250 ml trockenem Toluol wird bei Raumtemperatur unter mässigem Rühren eine Lösung von 10,4 g (0,055 Mol) R(-)-4(Trichlormethyl)-2-oxetanon (Lonza AG, Basel) in 25 ml trockenem Toluol innerhalb von 30 Minuten zugetropft. Die Mischung wird 12 Stunden bei Raumtemperatur und anschliessend 7 Stunden bei 70°C gerührt, wobei der Verbrauch des Oxetanons gaschromatographisch verfolgt wird. Nach Verbrauch des Oxetanons wird das modifizierte Kieselgel durch eine G4 Glasfritte filtriert, 3-mal mit je 200 ml trockenem Toluol gewaschen und zuletzt im Hochvakuum bei 0,133 Pascal/20-60°C getrocknet. Es werden 63,9 g (96,3 % der Theorie) eines chiral modifizierten Trägermaterials erhalten, dessen Partikelgrössenverteilung, spezifische Oberfläche und Porengrössenverteilung im Vergleich zum Ausgangsprodukt praktisch unverändert sind. Das Produkt enthält 8,24 % Chlor und 1,24 % Stickstoff entsprechend einem Gehalt von 0,775 mMol/g an chiralen (R)-4,4,4-Trichlor-3-hydroxy-butyramid Gruppen und einem 80%-igen Umsatz der ursprünglich vorhandenen Aminogruppen.

Beispiel 11:

Analog Beispiel 10 werden 5 g getrocknetes, aminopropyl-funktionalisiertes Kieselgel (Lichrosorb $NH_2$, Merck AG Darmstadt; Partikelgrösse 5 µm, N-Gehalt 1,36 % entsprechend 0,97 % mVal/g Kieselgel) bei 20-70°C mit 1,5 g (0,00793 Mol) R(-)-4(Trichlormethyl)-2-oxetanon in 70 ml trockenem Toluol umgesetzt. Man erhält 5,5 g (93,0 % der Theorie) eines chiral modifizierten, feinteiligen Kieselgels, das 1,24 % Stickstoff und 7,53 % Chlor enthält, entsprechend einem Gehalt von 0,708 mMol/g an (R)-4,4,4-Trichlor-3-hydroxy-butyramid Gruppen und einem 73%-igen Umsatz der kieselgel-gebundenen Aminogruppen.

Beispiel 12:

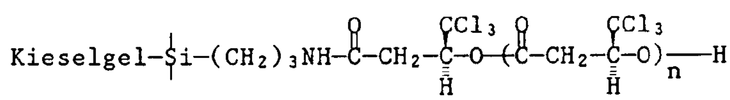

Analog Beispiel 10 werden 8 g eines aminopropyl-funktionalisierten Kieselgels (N-Gehalt: 1,04 mVal/g; Partikelgrösse 10 µm) in 80 ml trockenem Tetrahydrofuran mit 15,8 g (0,0832 Mol) R(-)-4(Trichlormethyl)-2-oxetanon in einer Stickstoffatmosphäre unter Zusatz von 4 Tropfen Dibutylzinndilaurat während 40 Stunden bei 20-60°C umgesetzt. Man erhält 8,9 g eines chiral modifizierten Kieselgels mit einem Stickstoffgehalt von 1,4 % und einem Chlorgehalt von 9,3 % entsprechend einem Gehalt an chiralen Gruppen von 0,874 mMol/g.

Beispiel 13:

Kieselgel$-\overset{|}{\underset{|}{Si}}-(CH_2)_3-NH-(CH_2)_2-NH_2$

Eine Suspension von 500 g Kieselgel (Kieselgel Si 60, Merck AG, Darmstadt; Partikelgrösse 15-25 μm) in 3 ltr. Toluol wird durch azeotrope Destillation am Wasserabscheider von Wasser befreit. Anschliessend werden 500 g 3-[N-(2-aminoethyl)]-aminopropyl-trimethoxysilan zugesetzt, und aus der Mischung wird über eine 50 cm Füllkörperkolonne das bei der Reaktion entstehende Methanol abdestilliert. Nach 10 Stunden ist im Destillat gaschromatographisch kein neu gebildetes Methanol mehr nachzuweisen. Das modifizierte Kieselgel wird durch eine Glasfritte abfiltriert, 3-mal mit je 300 ml trockenem Toluol gewaschen, und im Hochvakuum bis zur Gewichtskonstanz getrocknet. Es werden 630,5 g Produkt erhalten, dessen Elementaranalyse einen Gehalt von 8,0 % C, 2,1 % H und 3,6 % N ergibt. Diese Werte entsprechen einem Gehalt von 1,28 mMol 3-[N-(2-aminoethyl)-aminopropyl-Gruppen pro g modifiziertes Kieselgel.

Beispiele 14-18:

Analog Beispiel 13 werden die in der Tabelle 2 aufgeführten Kieselgele mit den Silanen
APTES ≡ 3-Aminopropyl-triethoxysilan (Fluka AG, Buchs)
GF 91 ≡ 3-[N-(2-aminoethyl)]aminopropyl-trimethoxysilan (Wacker AG, Burghausen, BRD) umgesetzt.

Tabelle 2

| Beispiel Nr. | Kieselgel (Menge) | Lösungsmittel | Aminosilan (Menge) | Menge Produkt und Funktionalität* | Eigenschaften |
|---|---|---|---|---|---|
| 14 | Matrex Silica medium (5 µm; 100 Å) (Amicon Corp., Lausanne) (24,2 g) | Toluol (250 ml) | GF-91 (24,2 g) | 28,2 g und 1,03 mMol/g | Elementaranalyse: 6,7 % C 1,7 % H 2,9 % N spez. Oberfläche (BET): 225 $m^2/g$ |
| 15 | Aerosil 380 (7 nm; 380 $m^2/g$) (Degussa, Frankfurt) (75 g) | Toluol (2000 ml) | APTES (112,5 g) | 84,7 g und 1,35 mMol/g | Elementaranalyse: 6,4 % C 1,6 % H 1,9 % N spez. Oberfläche (BET): 189 $m^2/g$ |
| 16 | Aerosil 200 (12 nm; 200 $m^2/g$) (Degussa, Frankfurt) (70 g) | Toluol (2000 ml) | APTES (105 g) | 78,1 g und 2,0 mMol/g | Elementaranalyse: 8,0 % C 1,9 % H 2,8 % N Spez. Oberfläche (BET): 125 $m^2/g$ |
| 17 | Aerosil 380 (7 nm; 380 $m^2/g$) (Degussa, Frankfurt) (68 g) | Toluol (2000 ml) | GF-91 (107 g) | 77,7 g und 1,57 mMol/g | Elementaranalyse: 8,3 % C 2,0 % H 4,4 % N spez. Oberfläche (BET): 156 $m^2/g$ |
| 18 | Aerosil 200 (12 nm; 200 $m^2/g$) (Degussa, Frankfurt) (80,5 g) | Toluol (2000 ml) | GF-91 (127 g) | 87,3 g und 1,0 mMol/g | Elementaranalyse: 6,2 % C 1,5 % H 2,8 % N spez. Oberfläche (BET): 129 $m^2/g$ |

* Beispiele 15 und 16 bezogen auf mMol $-(CH_2)_3-NH_2$

Beispiele 14, 17 und 18 bezogen auf mMol $-(CH_2)_3-NH-(CH_2)_2-NH_2$

Beispiel 19:

Wie in Beispiel 10 beschrieben werden 50 g des gemäss Beispiel 13 hergestellten modifizierten Kieselgels mit 36,5 g (0,19 Mol) R-(-)-4-Trichlormethyl-2-oxetanon in 250 ml Toluol umgesetzt. Nach Filtration, Waschen und Trocknen werden 65,33 g (88 % der Theorie) chiral modifiziertes Kieselgel erhalten, das 12,12 % C, 1,85 % H, 2,57 % N und 13,98 % Cl enthält. Aus der elementaranalytischen Zusammensetzung lässt sich eine Belegung des Materials von 1,31 mMol (R)-4,4,4-Trichlor-3-hydroxy-butyramid-Gruppen pro g ermitteln, entsprechend einem Umsatz von 51,2 % bezogen auf die Gesamtheit an primären und sekundären Aminogruppen im

Ausgangsprodukt.

Das so hergestellte chiral modifizierte Kieselgel weist eine spezifische Oberfläche (BET) von 163 m²/g und einen Medianwert der Partikelgrössenverteilung von 19 µm auf, was zeigt, dass die poröse, paritkuläre Struktur des Kieselgels durch die Behandlung nicht nachteilig beeinflusst wird.

Beispiel 20-24:

Wie in der nachstehenden Tabelle 3 aufgeführt, werden weitere aminogruppenhaltige Kieselgele und organische Polymerträger mit einer Reihe von optisch aktiven Laktonen umgesetzt, wobei die Reaktionsbedingungen gemäss Beispiel 19 eingehalten werden.

Tabelle 3

| Beispiel Nr. | Aminogruppenhaltiger Träger (Menge) | Chirales Lakton (Menge) | Lösungsmittel (Menge) | Menge Produkt und Funktionalität* | Eigenschaften |
|---|---|---|---|---|---|
| 20 | Kieselgel hergestellt nach Beispiel 14 (15 g) | 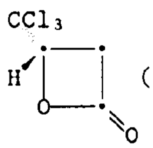 (7,2 g) S(+)-Form | Toluol (75 ml) | 18,3 g und 1,23 mMol/g | 10,9 % C<br>1,7 % H<br>2,3 % N<br>13,1 % Cl |
| 21 | Aminofunktionalisiertes Aerosil nach Beispiel 15 (5 g) | 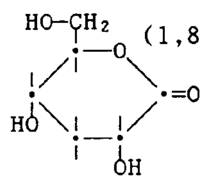 (1,8 g) D(+)-Form | N,N-Dimethylacetamid (90 ml) | 5,8 g und 0,46 mMol/g | 9,2 % C<br>1,9 % H<br>1,2 % N |
| 22 | Aminofunktionalisiertes Aerosil nach Beispiel 16 (5 g) | 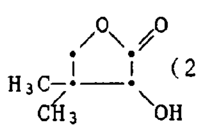 (2 g) D(-)-Form | Dioxan (75 ml) | 6.5 g und 0,34 mMol/g | 13,6 % C<br>1,9 % H<br>2,1 % N |
| 23 | Aminofunktionalisiertes Aerosil nach Beispiel 17 (3,5 g) | (1,6 g) 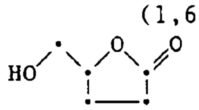 S(+)-Form | Dioxan (60 ml) | 4,3 g und 0,37 mMol/g | 12,7 % C<br>2,3 % H<br>3,1 % N |
| 24 | Aminofunktionalisiertes Aerosil nach Beispiel 18 (5 g) | 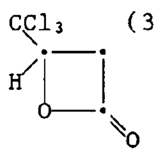 (3 g) R(+)-Form | Dioxan (70 ml) | 7,1 g und 0,69 mMol/g | 9,1 % C<br>1,5 % H<br>2,3 % N<br>7,3 % Cl |

* bezogen auf aufgepfropfte Hydroxy-carbonsäurereste

Beispiel 25: Chirale Modifizierung von DC-Fertigplatten:

Aminopropyl-funktionalisierte Kieselgel-Fertigplatten für die Dünnschichtchromatographie (HPTLC-Fertigplatte $NH_2F_{254}S$, Merck AG, Darmstadt) werden bei Raumtemperatur während 48 Stunden in eine Lösung von 20 g R(-)-4-Trichlormethyl-2-oxetanon in 400 ml trockenem Toluol eingetaucht. Nach dieser Behandlung werden die Platten durch 3-maliges Waschen mit jeweils frischem Toluol während 24 Stunden von anhaftendem, nicht umgesetztem Lakton befreit und anschliessend unter $N_2$ bei 40°C und 0,133 Pascal bis zur Gewichtskonstanz getrocknet. Die elementaranalytische Untersuchung der Beschichtung der so hergestellten Dünnschichtplatten stellt sich im Vergleich zu derjenigen der Ausgangs-Fertigplatten wie folgt dar:

| | % C | % H | % N | % Cl |
|---|---|---|---|---|
| HPTLC-Fertigplatten $NH_2F_{254}S$: | 6,2 | 2,2 | 2,0 | >0,3 |
| Mit Lakton behandelte Platten: | 9,0 | 1,9 | 1,9 | 7,4 |

Das Resultat entspricht einer Belegung des Beschichtungsmaterials mit chiralen R(-)-4-Trichlormethyl-3-hydroxy-butyramid Gruppen von 0,696 mMol/g.

Mit Hilfe der neuen DC-Platten können z.B. die Enantiomeren von racemischem 2,2′-Dihydroxy-1,1′-binaphthyl getrennt und identifiziert werden. Mit Chloroform als Laufmittel wird für das (-)Enantiomer ein $R_F$-Wert von 0,88 und für das (+)Enantiomer von 0,83 erhalten.

Beispiele 26-33: In-situ Belegung von amino-funktionalisierten HPLC-Kieselgel-Säulen mit optisch aktiven Laktonen.

Für die chirale Modifizierung von bereits fertig-gepackten aminofunktionalisierten HPLC-Kieselgel-Säulen werden kommerzielle Stahlsäulen eingesetzt, die von verschiedenen Herstellern erhältlich sind. Zusätzlich können käufliche Aminoalkyl-Kieselgele oder die in den Beispielen 13-18 beschriebenen Kieselgele unter Anwendung der "slurry"-Technik in üblicher Weise, wie z.B. bei C.C. Siemon, J. Liquid Chromatogr. 6, 765 (1983) beschrieben, für das Packen der HPLC-Säulen Verwendung finden.

Die chemische Modifizierung der so zugänglichen aminofunktionellen HPLC-Säulensysteme erfolgt in der Weise, dass eine 2-10%-ige Lösung des betreffenden optisch aktiven Laktons in Lösungsmitteln wie Methanol, Isopropanol, Tetrahydrofuran, Methylenchlorid oder Hexan bei einer Temperatur von 20-40°C während 10-72 Stunden im Kreislauf durch die jeweilige Säule gepumpt wird. Dabei wird der Verbrauch an Lakton UV-spektrometrisch verfolgt oder durch Gaschromatographie oder Refraktionsmessung laufend bestimmt. Nach beendeter Umsetzung wird die Säule mit reinem Lösungsmittel wiederholt gespült und die Menge an nicht verbrauchtem Lakton schliesslich zur Kontrolle durch Eindampfen der vereinigten Reaktions- und Spül-Lösungen gravimetrisch bestimmt.

Die theoretische Bodenzahl der Säulen, als Mass für die Qualität der Packung wird in der üblichen Weise mit Toluol als Referenzsubstanz bestimmt, wie es z.B. von V. Meyer, "Praxis der Hochleistungsflüssigchromatographie", 4. Auflage, Diesterweg/Salle/Sauerländer 1986, S. 20, Frankfurt beschrieben ist.
Die Reaktionsbedingungen und Resultate sind in Tabelle 4 zusammengefasst.

Tabelle 4

| Beispiel | Kieselgel aminofunktionalisiert | Säulendimension (Länge x Durchmesser) | Chirales Lakton, Menge, Lösungsmittel | Temperatur Zeit | Aufreagierte Laktonmenge | Theoretische Bodenzahl |
|---|---|---|---|---|---|---|
| 26 | Matrex-silica (5 µm; 100 Å; 0,55 mMol$NH_2$/g) Amicon, Lausanne | 250 mm x 4,6 mm | R(-)-4-Trichlor-methyl-2-oxetanon, 0,5 g/20 ml Hexan | 25°C 48 h | 352 mg | 10'400 |
| 27 | Nucleosil-$NH_2$ (10 µm; 300 Å; 0,51 mMol$NH_2$/g) Macherey & Nagel, Düren | 250 mm x 4,6 mm | S(+)-4-Trichlor-methyl-2-oxetanon, 0,5 g/20 ml Hexan/ $CH_2Cl_2$ (80:20) | 25°C 18 h | 314 mg | 11'130 |
| 28 | Spherisorb-$NH_2$ (3 µm) | 250 mm x 4,6 mm | S(+)-4-Trichlor-methyl-2-oxetanon, 0,665 g/30 ml Hexan/Isopropanol (95:5) | 20-40°C 60 h | 497 mg | 18'820 |
| 29 | Nucleosil-$NH_2$ (5 µm; 100 Å) | 200 mm x 4,0 mm | 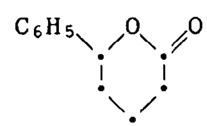 (+)-Enantiomer, 0,5 g/25 ml Hexan/ THF (80:20) | 20-40°C 48 h | 230 mg | 8'530 |

Tabelle 4 (Fortsetzung)

| Beispiel | Kieselgel aminofunktionalisiert | Säulendimension (Länge x Durchmesser) | Chirales Lakton, Menge, Lösungsmittel | Temperatur Zeit | Aufreagierte Laktonmenge | Theoretische Bodenzahl |
|---|---|---|---|---|---|---|
| 30 | Lichrosorb-$NH_2$ (7 µm) | 250 mm x 25 mm | R(-)-4-Trichlormethyl-2-oxetanon, 15 g/600 ml Hexan/$CH_2Cl_2$ (80:20) | 20-30°C 72 h | 7,8 g | 10'060 |
| 31 | Lichrosorb-$NH_2$ (10 µm) | 250 mm x 50 mm | S(+)-4-Trichlormethyl-2-oxetanon, 60 g/2,5 l Hexan/$CH_2Cl_2$ (80:20) | 20-40°C 72 h | 43 g | 10'800 |
| 32 | Nucleosil-$NH_2$ (10 µm) | 250 mm x 4,6 mm | R(+)-4-Methyl-4-trichlormethyl-2-oxetanon, 0,53 g/30 ml Hexan/$CH_2Cl_2$ (80:20) | 20-40°C 48 h | 380 mg | 9'200 |
| 33 | Beispiel 28 | 250 mm x 4,6 mm | S(+)-4-Trichlormethyl-2-oxetanon | 25°C 48 h | 450 mg | 14'000 |

Beispiel 34:

In leichter Abwandlung der üblichen Technik zur Füllung von analytischen HPLC-Säulen wird das in Beispiel 11 beschriebene chiral modifizierte Kieselgel zur Packung einer Stahlsäule von 250 mm Länge und 4,6 mm innerem Durchmesser verwendet. Dazu werden 3,5 g des Kieselgels in 55 ml eines Hexan/Isopropylalkohol-Gemisches (95:5) suspendiert und während 3 Minuten mit Ultraschall behandelt. Nach Ueberführen der Suspension in ein Stahlgefäss mit Magnetrührer, an der die zu füllende Stahlsäule am Deckel aufgeschraubt ist, wird die Suspension bei einem Druck von 250 bar und 10 ml Fluss pro Minute nach aufsteigender Methode zu einer Packung in der Säule verdichtet.
Die übliche Qualitätsprüfung der Packung mit Toluol als Referenzsubstanz und Hexan/Isopropanol (90:10) als Eluent ergibt ein Totvolumen von 3,2 ml und eine theoretische Bodenzahl von 10700.

B) Anwendungsbeispiele

Beispiel 35:

Die im Beispiel 34 beschriebene chiral modifizierte HPLC Kieselgel-Säule wird für die analytische Trennung von racemischem 2,2′-Diyhdroxy-1,1′-binaphthyl eingesetzt, wobei ein Shimadzu LC-6A HPLC-Gerät zum Einsatz kommt. Die verwendeten chromatographischen Parameter sind wie folgt:

| | |
|---|---|
| Eluent: | Chloroform |
| Probe: | 2 µl einer Lösung von 2,5 mg Produkt in 1 ml $CHCl_3$ |
| UV-Detektion: | 254 nm |
| Fluss: | 1,3 ml/min |
| Druck: | 181,5 bar |
| Attenuation: | 8 |

Die Charakterisierung erfolgt in üblicher Weise, wie z.B. in V. Meyer, "Praxis der Hochleistungsflüssigchromatographie", Diesterweg/Salle/Sauerländer, 4. Auflage, Frankfurt 1986, S. 18 ff. beschrieben mit den Kapazitätsfaktoren $k_1$ und $k_2$, sowie dem Trennfaktor $\alpha$ und dem Auflösungsfaktor $R_s$:

$k_1 = 0,39$
$k_2 = 0,63$
$\alpha = 1,61$
$R_s = 2,3$.

Beispiel 36:

Wie in Beispiel 35 beschrieben werden die folgenden racemischen Substanzen:

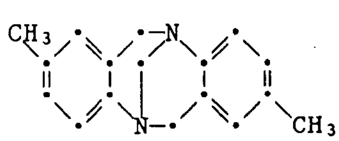
A

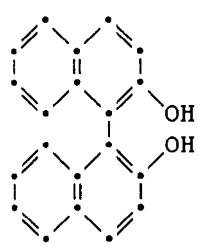
B

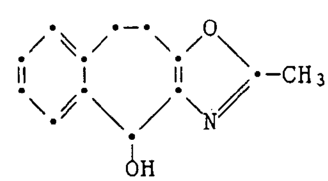
C

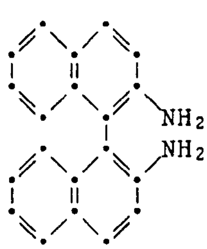
D

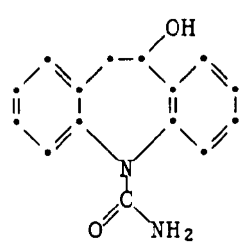
E

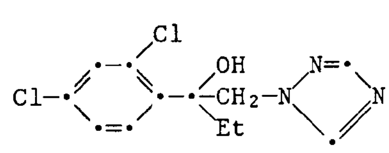
F

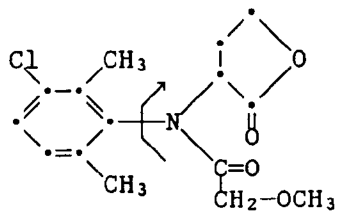

G

(aR, 1'S und aS, 1'R)

mit Hilfe der in den Beispielen beschriebenen chiralen HPLC-Säulen untersucht. Die verwendeten chromatographischen Parameter sowie die erhaltenen Resultate sind in der Tabelle 5 zusammengefasst.

Als Eluent können auch überkritisches $CO_2$ oder Kombinationen von überkritischem $CO_2$ mit polaren Modifikatoren wie z.B. 2-Propanol verwendet werden.

Tabelle 5

| Säule Bei-spiel | Sub-stanz | Probe (Konzen-tration) | Eluent | Druck [bar] Fluss [ml/min] | $k_1'$ | $k_2'$ | α | $R_s$ |
|---|---|---|---|---|---|---|---|---|
| 34 | B | 2 µl (2,5 mg/ml) | $CHCl_3$ | 42 0,5 | 0,13 | 0,37 | 2,86 | 2,81 |
| 34 | A | 2 µl (5 mg/ml) | Hexan/t-Butyl-methylether (90:10) | 0 0,5 | 6,72 | 7,35 | 1,09 | 1,31 |
| 34 | C | 5 µl (5 mg/ml) | Hexan/$CHCl_3$/ Acetonitril (49:50:1) | 130 1 | 7,53 | 8,54 | 1,13 | 1,43 |
| 34 | D | 2 µl (8,8 mg/ml) | Hexan/2-Propanol (95:5) | 0 0,5 | 1,96 | 2,14 | 1,1 | 1,17 |
| 34 | E | 2 µl (5 mg/ml) | Hexan/2-Propanol (98:2) | 0 0,5 | 3,06 | 3,36 | 1,1 | 1,46 |
| 34 | F | 2 µl (7,2 mg/ml) | Hexan/$CHCl_3$/ Acetonitril (49:50:1) | 155 1 | 2,74 | 3,01 | 1,1 | 1,48 |
| 34 | G | 2 µl (6 mg/ml) | $CHCl_3$ | 43 1 | 1,03 | 1,12 | 1,08 | 1,21 |
| 34 | A | 1 µl (4 mg/ml) | Hexan/2-Propanol (90:10) | 0 0,5 | 0,75 | 1,08 | 1,44 | 1,74 |
| 26 | A | 2 µl (5 mg/ml) | Hexan/2-Propanol (95:5) | 0 0,5 | 1,9 | 2,71 | 1,43 | 3,63 |
| 26 | C | 2 µl (4 mg/ml) | Hexan/2-Propanol (95:5) | 0 0,5 | 2,4 | 2,88 | 1,20 | 2,52 |
| 26 | F | 2 µl (5 mg/ml) | Hexan/2-Propanol (98:2) | 0 0,5 | 4,92 | 5,44 | 1,11 | 1,68 |
| 26 | A | 2 µl (5 mg/ml) | Hexan/$CH_2Cl_2$ (1:1) | 0 0,5 | 0,87 | 1,2 | 1,37 | 2,47 |
| 34 | A | 5 µl (1 mg/ml) | $CO_2$/2-Propanol (90:10) | 375,8 Δp 58,60 2 | 0,44 | 0,67 | 1,53 | 2,34 |
| 34 | A | 5 µl (1 mg/ml) | $CO_2$/2-Propanol (85:15) | 379,2 Δp 62,05 2 | 0,10 | 0,23 | 2,39 | 1,37 |

Tabelle 5 (Fortsetzung)

| Säule Beispiel | Substanz | Probe (Konzentration) | Eluent | Druck [bar] Fluss [ml/min] | $k_1'$ | $k_2'$ | α | $R_s$ |
|---|---|---|---|---|---|---|---|---|
| 28 | A | 2 µl (3 mg/ml) | Hexan/2-Propanol (95:5) | 44 1 | 2,03 | 2,82 | 1,38 | 5,16 |
| 28 | A | 2 µl (2,5 mg/ml) | $CHCl_3$ | 70 1 | 0,46 | 0,73 | 1,58 | 4,74 |
| 28 | A | 4 µl (9,5 mg/ml) | $CHCl_3$/1,1,1-Trichlorethan (4:1) | 113 1 | 0,18 | 0,31 | 1,72 | 1,72 |
| 28 | A | 2 µl (2,5 mg/ml) | $CHCl_3$/Hexan/Acetonitril (50:49:1) | 89 1 | 1,91 | 2,58 | 1,35 | 2,99 |
| 28 | G | 2 µl (5 mg/ml) | $CHCl_3$/Hexan/Acetonitril (50:49:1) | 56 1 | 3,79 | 4,12 | 1,09 | 1,4 |
| 28 | G | 2 µl (9 mg/ml) | $CHCl_3$ | 67 1 | 2,38 | 2,55 | 1,07 | 0,98 |
| 28 | G | 4 µl (8 mg/ml) | $CHCl_3$/Acetonitril (99:1) | 125 1 | 1,09 | 1,19 | 1,09 | 1,1 |
| 26 | A | 50 µl (20 mg/ml) | Hexan/2-Propanol (95:5) | 0 0,5 | 1,63 | 2,23 | 1,41 | 1,57 |
| 30 | A | 1000 µl (28 mg/ml) | Hexan/2-Propanol (95:5) | 5 9,9 | 1,0 | 1,3 | 1,29 | 1,02 |
| 31 | A | 3000 µl (20 mg/ml) | Heptan/2-Propanol (95:5) | 0 60 | 1,01 | 1,38 | 1,37 | 1,67 |
| 33 | C | 5 µl (1 mg/ml) | $CHCl_3$/Hexan/Acetonitril (50:49:1) | 32 1 | 1,17 | 1,38 | 1,18 | 1,64 |
| 27 | C | 5 µl (1 mg/ml) | $CHCl_3$/Hexan/Acetonitril (50:49:1) | 21 1 | 8,65 | 9,40 | 1,09 | 1,26 |
| 27* | C | 5 µl (1 mg/ml) | $CHCl_3$/Hexan/Acetonitril (50:49:1) | 21 1 | 5,08 | 6,09 | 1,20 | 2,60 |

Tabelle 5 (Fortsetzung)

| Säule Beispiel | Substanz | Probe (Konzentration) | Eluent | Druck [bar] Fluss [ml/min] | $k'_1$ | $k'_2$ | α | $R_s$ |
|---|---|---|---|---|---|---|---|---|
| 34 | C | 10 µl (1 mg/ml) | $CHCl_3$/Hexan/ Acetonitril (50:49:1) | 50 1 | 1,03 | 1,25 | 1,21 | 1,04 |

* Zusatz von 0,5 % (R)-N-Hexyl-4,4,4-trichlor-3-hydroxbuttersäureamid.

## Patentansprüche

1. Verbindungen der Formel I

$$(R^1O)_{3-a}Si(R^2)_a-R^3-(X-R^4)_b-Y-\left(\overset{O}{\overset{\|}{C}}-R^5-O\right)_e-H \qquad (I),$$

worin
$R^1$ $C_1$-$C_4$-Alkyl, Phenyl oder Benzyl bedeutet,
$R^2$ für $C_1$-$C_4$-Alkyl, Phenyl oder Benzyl steht,
a 0, 1 oder 2 bedeutet,
$R^3$ lineares oder verzweigtes $C_1$-$C_{12}$-Alkylen darstellt, das unsubstituiert oder mit -OH substituiert ist, oder $R^3$ Phenylen darstellt,
X für -O-, -S- oder -$NR^6$- steht, worin $R^6$ H, $C_1$-$C_4$-Alkyl oder -CO-$R^5$-OH bedeutet,
b für O steht,
oder b für eine Zahl von 1 bis 6 steht und $R^4$ lineares oder verzweigtes $C_1$-$C_{12}$-Alkylen darstellt, das unsubstituiert oder mit -OH substituiert ist,
Y für -O-, -S- oder -$NR^7$- steht, worin $R^7$ H oder $C_1$-$C_4$-Alkyl bedeutet,
$R^5$ der um die -CO-O-Gruppe verminderte zweiwertige Rest eines Lactons mit insgesamt 4 bis 7 Ringgliedern im Lactonring ist, das mindestens ein chirales C-Atom enthält und einer reinen enantiomeren Form oder zumindest überwiegend einer enantiomeren optisch aktiven Form entspricht, und
e eine Zahl von 1 bis 10 bedeutet.

2. Verbindungen gemäss Anspruch 1, worin $R^1$ für Methyl oder Ethyl steht.

3. Verbindungen gemäss Anspruch 1, worin $R^2$ für Methyl steht.

4. Verbindungen gemäss Anspruch 1, worin a 0 oder 1 bedeutet.

5. Verbindungen gemäss Anspruch 1, worin $R^3$ unsubstituiertes oder mit -OH substituiertes $C_1$-$C_6$-Alkylen ist, oder $R^3$ Phenylen bedeutet.

6. Verbindungen gemäss Anspruch 5, worin $R^3$ unsubstituiertes oder mit -OH substituiertes $C_3$-$C_4$-Alkylen ist, oder $R^3$ 1,3- oder 1,4-Phenylen bedeutet.

7. Verbindungen gemäss Anspruch 6, worin

$$R^3 \; -(CH_2)_n-,$$

-$CH(CH_3)$-, -$CH_2$-$CH(CH_3)$-$CH_2$- und n 3 oder 4 bedeuten.

**8.** Verbindungen gemäss Anspruch 1, worin X für -O- oder $-NR^6-$ steht, b eine Zahl von 1 bis 4 bedeutet, $R^6$ H oder $-CO-R^5-OH$ darstellt und $R^4$ für $C_1$-$C_4$-Alkylen steht.

**9.** Verbindungen gemäss Anspruch 8, worin b 1 oder 2 ist, X für $-NR^6-$ und $R^6$ für H oder $-CO-R^5-OH$ stehen, und $R^4$ für $-CH_2CH_2-$ oder $-CH_2CH_2CH_2-$steht.

**10.** Verbindungen gemäss Anspruch 1, worin Y für $-NR^7-$ steht und $R^7$ H, Methyl oder Ethyl bedeutet.

**11.** Verbindungen gemäss Anspruch 10, worin Y für -NH- steht.

**12.** Verbindungen gemäss Anspruch 1, worin $R^5$ der zweiwertige Rest eines Lactons mit insgesamt 4 oder 5 Ringgliedern ist.

**13.** Verbindungen gemäss Anspruch 1, worin $R^5$ lineares $C_2$-$C_5$-Alkylen oder $C_3$-$C_5$-Alkenylen darstellt, das mit $C_1$-$C_6$-Alkyl, $C_1$-$C_6$-Alkoxy, $C_1$-$C_6$-Alkylthio, $C_1$-$C_{12}$-Alkylamino, $C_5$- oder $C_6$-Cycloalkyl, $C_5$- oder $C_6$-Cycloalkoxy, $C_6$-$C_{10}$-Aryl, $C_6$-$C_{10}$-Aryloxy, $C_7$-$C_{11}$-Aralkyl, $C_7$-$C_{12}$-Aralkyloxy, $C_1$-$C_6$-Halogenalkyl, $C_1$-$C_6$-Hydroxyalkyl, $C_1$-$C_6$-Alkoxymethyl, ($C_6$-$C_{12}$-Aryloxy)-methyl, ($C_6$-$C_{18}$-Aryl)methyloxymethyl, $C_1$-$C_{12}$-Acyloxy, $-CO-OR^8$, -F, -Cl, -Br, -OH oder -CN substituiert ist, wobei $R^8$ $C_1$-$C_6$-Alkyl, Cyclohexyl, Phenyl oder Benzyl bedeutet.

**14.** Verbindungen gemäss Anspruch 1, worin $R^5$ einem Rest der Formel II entspricht,

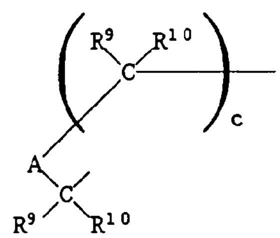

(II),

worin
A 1,2-Phenylen oder 2,3-Naphthylen bedeutet, das unsubstituiert oder mit -F, -Cl, -Br, -OH, -CN, $-NO_2$, $C_1$-$C_6$-Alkyl oder $C_1$-$C_6$-Alkoxy substituiert ist,
c für 0 oder 1 steht, und
$R^9$ und $R^{10}$ voneinander verschieden sind und H, $C_1$-$C_6$-Alkyl, $-CF_3$, Phenyl oder Naphthyl bedeuten, wobei das Phenyl oder Naphthyl unsubstituiert oder mit -F, -Cl, -Br, -OH, -CN, $-NO_2$, $-CF_3$, $C_1$-$C_6$-Alkyl oder $C_1$-$C_6$-Alkoxy substituiert ist.

**15.** Verbindungen gemäss Anspruch 1, worin sich ein chirales C-Atom im Rest $R^5$ in α- oder β-Stellung zur OH-Gruppe befindet.

**16.** Verbindungen gemäss Anspruch 1, worin $R^5$ für die R- oder S-Form von $-CH_2-CH(CCl_3)-$ oder

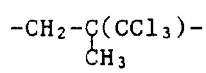

steht.

**17.** Verbindungen gemäss Anspruch 1, dadurch gekennzeichnet, dass es sich um die R- oder S-Enantiomeren der Formeln

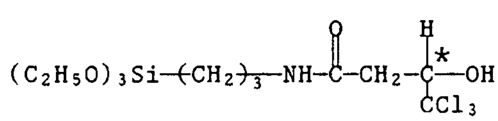

oder

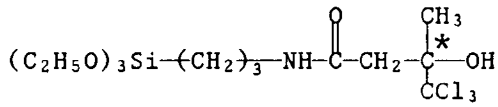

handelt, wobei * das chirale C-Atom in R- oder S-Form kennzeichnet.

**18.** Verfahren zur Herstellung von Verbindungen der Formel I, dadurch gekennzeichnet, dass man 1 Mol einer Verbindung der Formel III

$$(R^1O)_{3-a}Si(R^2)_a - R^3 -(X-R^4)_b - Y-H \qquad (III)$$

mit e Mol einer Verbindung der Formel IV

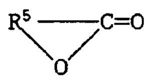

(IV)

umsetzt, wobei $R^1$, $R^2$, $R^3$, $R^4$, $R^5$, X, Y, a, b und e die in Anspruch 1 angegebenen Bedeutungen haben.

**19.** Material, dadurch gekennzeichnet, dass an eine Brückengruppe eines festen Trägermaterials Reste der Formel Va, Vb und/oder Vc

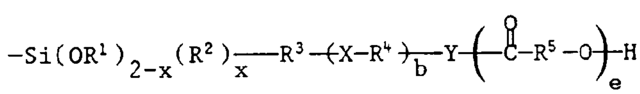

(Va),

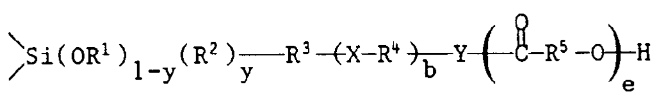

(Vb),

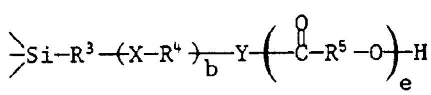

(Vc),

gebunden sind, worin x für 0, 1 oder 2 und y für 0 oder 1 stehen und $R^1$, $R^2$, $R^3$, $R^4$, $R^5$, X, Y, b und e die in Anspruch 1 angegebenen Bedeutungen haben.

**20.** Material gemäss Anspruch 19, worin es sich bei der Brückengruppe um -O- handelt.

**21.** Verfahren zur Herstellung eines Materials gemäss Anspruch 19, dadurch gekennzeichnet, dass man
a) ein festes Trägermaterial mit über Brückengruppen gebundenen Resten der Formeln VIa, VIb und/oder VIc

$$-Si(OR^1)_{2-x}(R^2)_x - R^3 -(X-R^4)_b - Y-H \qquad (VI),$$

$$\rangle Si(OR^1)_{1-y}(R^2)_y—R^3—(X—R^4)_b—Y—H \qquad (VI),$$

$$\rangle Si—R^3—(X—R^4)_b—Y—H \qquad (VI),$$

mit e Mol eines Lactons der Formel IV

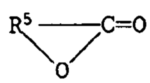

(IV)

umsetzt, oder

b) ein festes Trägermaterial, das gegenüber der Silangruppe

$$(R^1O)_{3-a}Si(R^2)_a—$$

reaktive Gruppen enthält, mit einer Verbindung der Formel I gemäss Anspruch 1 umsetzt, wobei x für 0, 1 oder 2 und y 0 oder 1 bedeuten und $R^1$, $R^2$, $R^3$, $R^4$, $R^5$, X, Y, b und e die in Anspruch 1 angegebenen Bedeutungen haben.

**22.** Verwendung eines Materials gemäss Anspruch 19 als stationäre Phase in chromatographischen Trennverfahren von insbesondere chiralen Verbindungen.

## Claims

**1.** A compound of formula I

$$(R^1O)_{3-a}Si(R^2)_a—R^3—(X—R^4)_b—Y—\left(\overset{O}{\overset{\|}{C}}—R^5—O\right)_e—H \qquad (I),$$

wherein

$R^1$ is $C_1$-$C_4$alkyl, phenyl or benzyl,

$R^2$ is $C_1$-$C_4$alkyl, phenyl or benzyl,

a is 0, 1 or 2,

$R^3$ is linear or branched unsubstituted or OH-substituted $C_1$-$C_{12}$alkylene or is phenylene,

X is -O-, -S- or -$NR_6$, wherein $R^6$ is H, $C_1$-$C_4$alkyl or -CO-$R^5$-OH,

b is 0, or

b is an integer from 1 to 6 and $R^4$ is linear or branched unsubstituted or OH-substituted $C_1$-$C_{12}$alkylene,

Y is -O-, -S- or -$NR^7$-, wherein $R^7$ is H or $C_1$-$C_4$alkyl,

$R^5$ is the divalent radical, diminished by the -CO-O group, of a lactone having a total of 4 to 7 ring members in the lactone ring and containing at least one chiral carbon atom and corresponding to a pure enantiomeric form or at least predominantly to an optically active enantiomeric form, and

e is an integer from 1 to 10.

**2.** A compound according to claim 1, wherein $R^1$ is methyl or ethyl.

**3.** A compound according to claim 1, wherein $R^2$ is methyl.

**4.** A compound according to claim 1, wherein a is 0 or 1.

5. A compound according to claim 1, wherein $R^3$ is unsubstituted or OH-substituted $C_1$-$C_6$alkylene or is phenylene.

6. A compound according to claim 5, wherein $R^3$ is unsubstituted or OH-substituted $C_3$-$C_4$alkylene or is 1,3- or 1,4-phenylene.

7. A compound according to claim 6, wherein $R^3$ is $-(CH_2)_n-$, $-CH(CH_3)-$ or $-CH_2-CH(CH_3)-CH_2-$, and n is 3 or 4.

8. A compound according to claim 1, where X is -O- or $-NR^6-$, b is an integer from 1 to 4, $R^6$ is H or $-CO-R^5-OH$, and $R^4$ is $C_1$-$C_4$alkylene.

9. A compound according to claim 8, wherein b is 1 or 2, X is $-NR^6$ and $R^6$ is H or $-CO-R^5-OH$, and $R^4$ is $-CH_2CH_2-$ or $-CH_2CH_2CH_2-$.

10. A compound according to claim 1, wherein Y is $-NR^7-$ and $R^7$ is H, methyl or ethyl.

11. A compound according to claim 10, wherein Y is -NH-.

12. A compound according to claim 1, wherein $R^5$ is the divalent radical of a lactone containing a total of 4 or 5 ring members.

13. A compound according claim 1, wherein $R^5$ is linear $C_2$-$C_5$alkylene or $C_3$-$C_5$alkenylene, each of which is substituted by $C_1$-$C_6$alkyl, $C_1$-$C_6$alkoxy, $C_1$-$C_6$alkylthio, $C_1$-$C_{12}$alkylamino, $C_5$- or $C_6$cycloalkyl, $C_5$- or $C_6$cycloalkoxy, $C_6$-$C_{10}$aryl, $C_6$-$C_{10}$aryloxy, $C_7$-$C_{11}$aralkyl, $C_7$-$C_{12}$aralkoxy, $C_1$-$C_6$haloalkyl, $C_1$-$C_6$hydroxyalkyl, $C_1$-$C_6$alkoxymethyl, ($C_6$-$C_{12}$aryloxy)methyl, ($C_6$-$C_{18}$aryl)methoxymethyl, $C_1$-$C_{12}$acyloxy, $-CO-OR^8$, -F, -Cl, -Br, -OH or -CN, where $R^8$ is $C_1$-$C_6$alkyl, cyclohexyl, phenyl or benzyl.

14. A compound according to claim 1, wherein $R^5$ is a radical of formula II

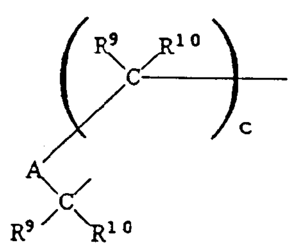

(II)

wherein
A is 1,2-phenylene or 2,3-naphthylene, each unsubstituted or substituted by -F, -Cl, -Br, -OH, -CN, $-NO_2$, $C_1$-$C_6$alkyl or $C_1$-$C_6$alkoxy,
c is 0 or 1, and
$R^9$ and $R^{10}$ are different from each other and are H, $C_1$-$C_6$alkyl, $-CF_3$, unsubstituted phenyl or naphthyl, or phenyl or naphthyl each substituted by -F, -Cl, -Br, -OH, -CN, $-NO_2$, $-CF_3$, $C_1$-$C_6$alkyl or $C_1$-$C_6$alkoxy.

15. A compound according to claim 1, wherein a chiral carbon atom in the radical $R^5$ is α- or β-oriented to the OH group.

16. A compound according to claim 1, wherein $R^5$ is the R- or S-form of $-CH_2-CH(CCl_3)-$ or

17. A compound according to claim 1, which is the R- or S-enantiomer of formula

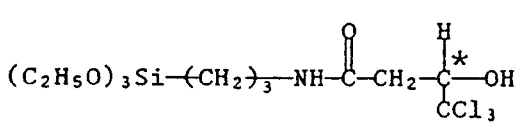

or

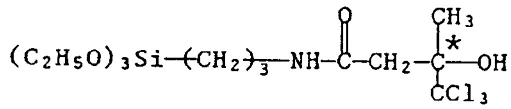

where * denotes the chiral carbon atom in R- or S-form.

**18.** A process for the preparation of a compound of formula I, which comprises reacting 1 mol of a compound of formula III

$$(R^1O)_{3-a}Si(R^2)_a—R_3—(X—R^4)_b—Y—H \qquad (III)$$

with e mol of a compound of formula IV

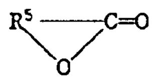

(IV)

where $R^1$, $R^2$, $R^3$, $R^4$, $R^5$, X, Y, a, b and e are defined in claim 1.

**19.** A material wherein radicals of formulae Va, Vb and/or Vc

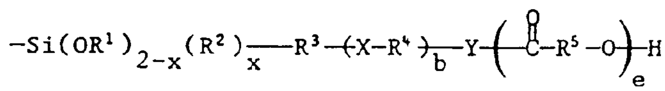

(Va)

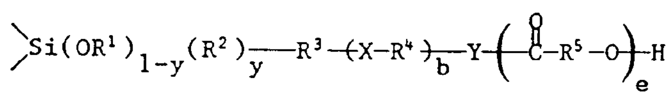

(Vb)

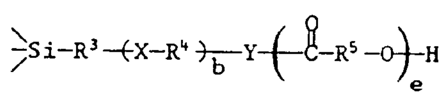

(Vc)

in which x is 0, 1 or 2, and y is 0 or 1, and $R^1$, $R^2$, $R^3$, $R^4$, $R^5$, X, Y, b and e are as defined in claim 1, are attached to a bridging group of a solid support material.

**20.** A material according to claim 19, wherein the bridging group is -O-.

**21.** A process for the preparation of a material according to claim 19, which comprises reacting

a) a solid support material which contains radicals of formulae VIa, VIb and/or VIc

$$-Si(OR^1)_{2-x}(R^2)_x—R^3—(X—R^4)_b—Y—H \qquad (VIa)$$

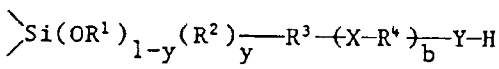

(VIb)

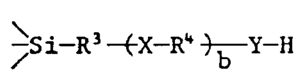

(VIc)

attached via bridging groups, with e mol of a lactone of formula IV

(IV)

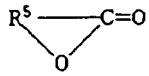

or

b) reacting a solid support material which contains groups which are reactive to the silane group $(R^1O)_{3-a}Si(R^2)_a$-, with a compound of formula I according to claim 1, where X is 0, 1 or 2, and y is 0 or 1, and $R^1$, $R^2$, $R^3$, $R^4$, $R^5$, X, Y, b and e are as defined in claim 1.

**22.** Use of a material according to claim 19 as stationary phase in methods for the chromatographic separation of, in particular, chiral compounds.

## Revendications

**1.** Composés de formule I

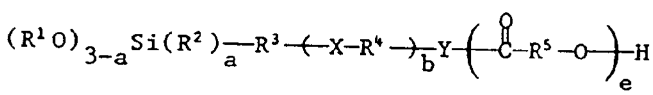

(I),

dans laquelle

$R^1$ est un radical alkyle en $C_1$-$C_4$, phényle ou benzyle,

$R^2$ est un radical alkyle en $C_1$-$C_4$, phényle ou benzyle,

a vaut 0, 1 ou 2,

$R^3$ est un radical alkylène en $C_1$-$C_{12}$ à chaîne droite ou ramifiée, non substitué ou substitué par -OH, ou encore $R^3$ est le radical phénylène,

X est -O-, -S- ou -$NR^6$-, où $R^6$ est H, un radical alkyle en $C_1$-$C_4$ ou -CO-$R^5$-OH,

b vaut 0,

ou bien b représente un nombre de 1 à 6, et $R^4$ est un radical alkylène en $C_1$-$C_{12}$ à chaîne droite ou linéaire, non substitué ou substitué par -OH,

Y est -O-, -S- ou -$NR^7$-, où $R^7$ est H ou un radical alkyle en $C_1$-$C_4$,

$R^5$ est le résidu divalent, diminué du groupe -CO-O, d'une lactone ayant en tout 4 à 7 chaînons dans le cycle lactone, contenant au moins un atome de carbone chiral d'une forme énantiomère pure ou au moins correspondant essentiellement à une forme énantiomère optiquement active, et

e est un nombre de 1 à 10.

**2.** Composés selon la revendication 1, dans lesquels $R^1$ est un radical méthyle ou éthyle.

**3.** Composés selon la revendication 1, dans lesquels $R^2$ est le radical méthyle.

**4.** Composés selon la revendication 1, dans lesquels a vaut 0 ou 1.

**5.** Composés selon la revendication 1, dans lesquels $R^3$ est un radical alkylène en $C_1$-$C_6$ non substitué ou substitué par -OH, ou encore $R^3$ est le radical phénylène.

**6.** Composés selon la revendication 5, dans lesquels $R^3$ est un radical alkylène en $C_3$-$C_4$ non substitué ou substitué par -OH, ou encore $R^3$ est un radical phénylène-1,3 ou -1,4.

**7.** Composés selon la revendication 6, dans lesquels $R^3$ est -$(CH_2)_n$-, -$CH(CH_3)$-, -$CH_2$-$CH(CH_3)$-$CH_2$- et n vaut 3 ou 4.

**8.** Composés selon la revendication 1, dans lesquels X est -O- ou -$NR^6$-, b est un nombre de 1 à 4, $R^6$ est H ou -CO-$R^5$-OH, et $R^4$ est un radical alkylène en $C_1$-$C_4$.

**9.** Composés selon la revendication 8, dans lesquels b vaut 1 ou 2, X est -$NR^6$-, et $R^6$ est H ou -CO-$R^5$-OH,

et $R^4$ représente $-CH_2CH_2-$ ou $-CH_2CH_2CH_2-$.

**10.** Composés selon la revendication 1, dans lesquels Y est $-NR^7-$, et $R^7$ est H ou un radical méthyle ou éthyle.

**11.** Composés selon la revendication 10, dans lesquels Y est -NH-.

**12.** Composés selon la revendication 1, dans lesquels $R^5$ est le résidu divalent d'une lactone ayant en tout 4 ou 5 chaînons.

**13.** Composés selon la revendication 1, dans lesquels $R^5$ est un radical alkylène en $C_2$-$C_5$ ou alcénylène en $C_3$-$C_5$ linéaire, substitué par un ou plusieurs radicaux alkyle en $C_1$-$C_6$, alcoxy en $C_1$-$C_6$, alkylthio en $C_1$-$C_6$, alkylamino en $C_1$-$C_{12}$, cycloalkyle en $C_5$ ou $C_6$, cycloalcoxy en $C_5$ ou $C_6$, aryle en $C_6$-$C_{10}$, aryloxy en $C_6$-$C_{10}$, aralkyle en $C_7$-$C_{11}$, aralkyloxy en $C_7$-$C_{12}$, halogènalkyle en $C_1$-$C_6$, hydroxyalkyle en $C_1$-$C_6$, (alcoxy en $C_1$-$C_6$)-méthyle, (aryloxy en $C_6$-$C_{12}$)-méthyle, (aryle en $C_6$-$C_{18}$)-méthyloxyméthyle, acyloxy en $C_1$-$C_{12}$, $-CO-OR^8$, -F, -Cl, -Br, -OH ou -CN, où $R^8$ est un radical alkyle en $C_1$-$C_6$, cyclohexyle, phényle ou benzyle.

**14.** Composés de formule I dans laquelle $R^5$ est un radical de formule II

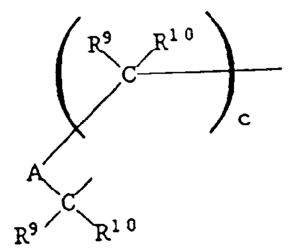

(II),

dans laquelle

A est un radical phénylène-1,2 ou naphtylène-2,3, non substitué ou substitué par -F, -Cl, -Br, -OH, -CN, $-NO_2$ ou un radical alkyle en $C_1$-$C_6$ ou alcoxy en $C_1$-$C_6$,

c vaut 0 ou 1, et

$R^9$ et $R^{10}$ sont différents l'un de l'autre et représentent chacun H ou un radical alkyle en $C_1$-$C_6$, $-CF_3$, phényle ou naphtyle, les radicaux phényle et naphtyle étant non substitués ou substitués par -F, -Cl, -Br, -OH, -CN, $-NO_2$, $-CF_3$, ou par des radicaux alkyle en $C_1$-$C_6$ ou alcoxy en $C_1$-$C_6$.

**15.** Composés selon la revendication 1, dans lesquels un atome de carbone chiral se trouve dans le radical $R^5$ en position $\alpha$ ou $\beta$ par rapport au groupe OH.

**16.** Composés selon la revendication 1, dans lesquels $R^5$ correspond à la forme R ou à la forme S de $-CH_2-CH(CCl_3)-$ ou

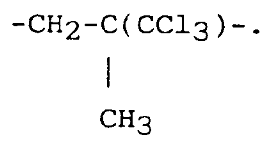

**17.** Composés selon la revendication 1, caractérisés en ce qu'il s'agit des énantiomères R ou S de formules :

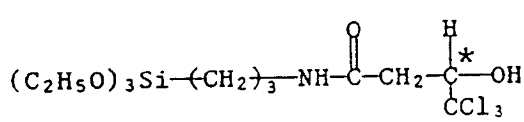

ou

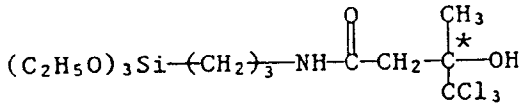

où * caractérise l'atome de carbone chiral dans sa forme R ou S.

**18.** Procédé pour préparer des composés de formule I, caractérisé en ce qu'on fait réagir 1 mole d'un composé de formule III

$$(R^1O)_{3-a}Si(R^2)_a-R^3-(X-R^4)_b-Y-H \qquad (III)$$

avec e moles d'un composé de formule IV

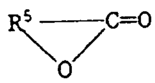
(IV)

où R¹, R², R³, R⁴ , R⁵, X, Y, a, b et e ont les significations données dans la Revendication 1.

**19.** Matériau, caractérisé en ce qu'à un groupe pontant d'un matériau support solide sont fixés des résidus de formule Va, Vb et/ou Vc

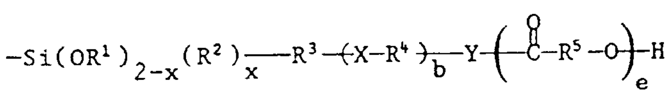
(Va),

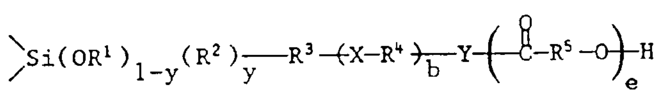
(Vb),

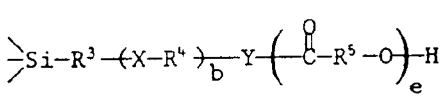
(Vc),

où x vaut 0, 1 ou 2 et y vaut 0 ou 1, et $R^1$, $R^2$, $R^3$, $R^4$, $R^5$, X, Y, b et e ont les significations données dans la revendication 1.

**20.** Matériau selon la revendication 19, dans lequel, pour ce qui est du groupe pontant, il s'agit du groupe -O-.

**21.** Procédé pour préparer un matériau, caractérisé en ce qu'on fait réagir

a) un matériau support solide comportant des résidus liés par l'intermédiaire de groupes pontants, de formules VIa, VIb et/ou VIc

$$-Si(OR^1)_{2-x}(R^2)_x-R^3-(X-R^4)_b-Y-H \qquad (VI),$$

$$>Si(OR^1)_{1-y}(R^2)_y-R^3-(X-R^4)_b-Y-H \qquad (\bar{V}I),$$

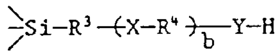

(VI),

avec e moles d'une lactone de formule IV

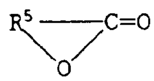

(IV)

ou bien

b) on fait réagir un matériau support solide, contenant des groupes réactifs vis-à-vis du groupe silane $(R^1O)_{3-a}Si(R^2)_a$-, avec un composé de formule I selon la revendication 1,

où x vaut 0, 1 ou 2 et y vaut 0 ou 1, et $R^1$, $R^2$, $R^3$, $R^4$, $R^5$, X, Y, b et e ont les significations données dans la revendication 1.

**22.** Utilisation d'un matériau selon la revendication 19 en tant que phase stationnaire dans des procédés de séparation chromatographique, en particulier de composés chiraux.